Europäisches Patentamt

European Patent Office

Office européen des brevets

(11) Veröffentlichungsnummer : **0 134 490**
**B1**

# (12) EUROPÄISCHE PATENTSCHRIFT

(45) Veröffentlichungstag der Patentschrift :
20.01.88

(21) Anmeldenummer : 84108132.6

(22) Anmeldetag : 11.07.84

(51) Int. Cl.⁴ : **C 09 D   3/80**, C 09 J   3/14,
**C 08 F   8/30**

(54) **Selbstvernetzende Überzugs-, Imprägnier- und Klebemittel.**

(30) Priorität : 19.07.83 DE 3325898

(43) Veröffentlichungstag der Anmeldung :
20.03.85 Patentblatt 85/12

(45) Bekanntmachung des Hinweises auf die Patenterteilung : 20.01.88 Patentblatt 88/03

(84) Benannte Vertragsstaaten :
BE DE FR GB IT NL

(56) Entgegenhaltungen :
EP-A- 0 003 516
EP-A- 0 015 644
EP-A- 0 016 518
US-A- 4 230 772

(73) Patentinhaber : BASF Aktiengesellschaft
Carl-Bosch-Strasse 38
D-6700 Ludwigshafen (DE)

(72) Erfinder : Buensch, Hellmut, Dr.
Panoramastrasse 81
D-6906 Leimen (DE)
Erfinder : Druschke, Wolfgang, Dr.
Berliner Strasse 28
D-6716 Dirmstein (DE)
Erfinder : Blum, Rainer
Bannwasserstrasse 58
D-6700 Ludwigshafen (DE)
Erfinder : Jaeger, Helmut
Im Weinberg 4
D-6719 Bobenheim (DE)

## Beschreibung

An Copolymerisatlösungen, wie sie zur Herstellung von Überzügen und Beschichtungen verwendet werden, wird aus Rücksicht auf die Umwelt in immer stärkerem Maße die Anforderung gestellt, daß sie einen möglichst niedrigen Lösemitelgehalt und einen hohen Polymerisatanteil aufweisen. Dies ist prinzipiell nur möglich, wenn die Polymeren ein niedriges Molekulargewicht haben. Um dennoch die Eigenschaften höhermolekularer Produkte zu erhalten, werden Vernetzer zugesetzt. Dabei sind vor allem 1-Komponentensysteme wegen ihrer besonders einfachen Verarbeitung von Interesse.

Geeignete Systeme aus Vernetzer und vernetzbaren Polymeren sollen bei Raumtemperatur und etwas erhöhter Temperatur, bis etwa 50 °C, möglichst lange Zeit stabil bleiben, d. h. nicht anvernetzen oder gelieren, jedoch beim Abdampfen der Lösemittel in möglichst kurzer Zeit bei einer möglichst niedrigen Temperatur zu vernetzten Polymerbeschichtungen, -Überzügen oder Imprägnierungen führen.

In besonderem Maß werden diese Anforderungen an Haftkleberlösungen gestellt. Für die Haftkleber werden hohe Scherfestigkeit und gute Anfaßklebrigkeit (tack) gefordert. Die Lösungen sollen lagerstabil sein und möglichst wenig vergilben. Daneben ist ein möglichst hoher Feststoffgehalt und die Verwendung überwiegend unpolarer Lösemittel gefordert.

Nach dem Stand der Technik werden diese Anforderungen nur unzureichend erfüllt. In der Regel verwendet man Lösungen, die neben dem Copolymerisat einen Vernetzer enthalten, der dem Haftkleber nach möglichst kurzzeitiger Trocknung bei niedrigen Temperaturen zu einer guten Kohäsion verhilft. So wird in der GB-PS 1 546 144 vorgeschlagen, modifizierte Melamin-Formaldehyd-Harze als Vernetzer für Acrylester-Polymerisate zu verwenden. Die dort beschriebenen Lösungen haben jedoch keine befriedigende Lagerstabilität, und die Kohäsion daraus hergestellter Filme genügt hohen Ansprüchen nicht.

In der GB-PS 1 448 937 ist die Verwendung von Metallchelatkomplexen, insbesondere des Titans als Vernetzer für Hydroxyalkylacrylat einpolymerisiert enthaltende Klebstoffpolymerisate, beschrieben, die US-PSen 4 158 051 und 4 234 660 beanspruchen die Verwendung von Polyalkoxymetalloxanen, insbesondere des Titans, als Vernetzer für derartige Klebstoffpolymerisate. Derartige Lösungen weisen eine starke Vergilbungstendenz auf, die Lagerstabilität ist ungenügend, ferner ist die Balance von kohäsion und Tack nicht befriedigen. Außerdem müssen polare Lösemittel, die in Lösemittelrückgewinnungsanlagen nicht verwendbar sind, mitverwendet werden.

Die Verwendung von organischen, wasserlöslichen Dihydraziden als Vernetzer für Carbonylgruppen aufweisende Polymerisate in wäßrigen Dispersionen wird in den EP 3516, 5167 und 15 644 beschrieben. Bei diesen Systemen liegen Vernetzer und zu vernetzendes Polymerisat in verschiedenen Phasen vor, und die Vernetzung tritt erst während des Abdampfens von Wasser ein.

In der ES-PS 16 518 werden Zubereitungen aus Aldehyde einpolymerisiert enthaltenden Polymeren und Dicarbonsäurebishydraziden bzw. -hydrazonen oder Polyacrylatpolyhydraziden bzw. -hydrazonen beansprucht. Derartige Zubereitungen, bei denen Aldehyd-Polymer und Hydrazid bzw. Hydrazon gelöst in derselben Phase vorliegen, sind jedoch nich lagerstabil und weisen Topfzeiten von maximal 8 Stunden auf.

Es war daher zu erwarten, daß Lösungen, in denen gelöste Ketogruppen enthaltende Polymere und Polyhydrazid-Verbindungen der gleichen Phase vorliegen, schnell gelieren.

Es wurde nun gefunden, daß selbstvernetzende Überzugs-, Imprägnier- und Klebemittel, die im wesentlichen aus

(A) Copolymerisaten olefinisch ungesättigter Monomerer, die auf 100 g des Copolymerisats 0,0001 bis 0,5 Mol $\alpha,\beta$-monoolefinisch ungesättigte Aldehyde und/oder Ketone (A) einpolymerisiert enthalten,

(B) Reaktionsgemische von 0,001 bis 2 Äquivalenten, bezogen auf (a), Polyhydrazin-Verbindungen (b) mit mindestens 5 Mol je Äquivalent (b) Monoaldehyden und/oder Monoketonen (c) eines Siedepunkts von 30 bis 200 °C und

(C) 0 bis 900 Gew.%, bezogen auf die Copolymerisate (A), Lösungsmitteln, die gegen (b) indifferent sind und einen Siedepunkt zwischen 30 und 250 °C haben, überraschend gut lagerbeständig sind.

Als Komponente (a) können die Copolymerisate (A) olefinisch ungesättigte Aldehyde und/oder Ketone, wie (Meth)Acrolein, Vinylalkylketone mit 1 bis 20 C-Atomen im Alkylrest, Formylstyrol, (Meth)acryloxyalkanale und -alkanone, deren Herstellung z. B. in der DE-OS 27 22 097 beschrieben ist, N-Oxoalkyl(meth)acrylamide, wie sie u.a. in der US-PS 4 266 007, der GB-PS 1 329 126 oder der GB-PS 1 350 339 beschrieben sind, z. B. N-3-oxobutyl-acrylamid und -methacrylamid, N-1,1-dimethyl-3-oxobutyl(meth)acrylamid (Diaceton(meth)acrylamid), sowie N-3-oxo-1,1-dibutil-2-propyl-hexylacrylamid, ferner Acetonyl- und Diaceton(meth)acrylat, Acrylamidopivalinaldehyd, einpolymerisiert enthalten. Bevorzugt werden 3-Oxoalkyl(meth)acrylate und N-3-oxoalkyl-(meth)acrylamide sowie Methylvinylketon und (Meth)acrolein.

Die Komponente (a) wird in solcher Menge gewählt, daß 0,0001 bis 0,5 Mol Carbonylverbindung auf 100 g des Copolymerisats (A) entfallen. Weniger als 0,0001 Mol führen nicht zu einer ausreichenden Vernetzung, mehr als 0,5 Mol sind nicht notwendig, um eine hinreichende Vernetzung zu erzielen. Man setzt bevorzugt 0,001 bis 0,2 Mol ungesättigter Carbonylverbindungen je 100 g Copolymerisat (A) ein.

Die Copolymerisate (A) enthalten vorzugsweise 0,1 bis 20, insbesondere 2 bis 10 % ihres Gewichts an $\alpha,\beta$-monoolefinisch ungesättigte Säuren einpolymerisiert. Geeignet sind z. B. Mono- und Dicarbonsäuren mit 3 bis 6 C-Atomen sowie die Monoester von 4 bis 6 C-Atome enthaltenden Dicarbonsäuren mit 1 bis 20 C-Atome enthaltenden Alkanolen, ferner olefinisch ungesättigte Sulfonsäuren und Phosphonsäuren, wie Vinylsulfonsäure. Bevorzugt verwendet man (Meth)acrylsäure, Crotonsäure, Maleinsäure, Fumarsäure, Monomethyl-, -butyl-, 2-ethylhexyl- oder -stearylmaleinat.

Eine weitere Gruppe bevorzugter Polymerer (A) enthält, gegebenenfalls zusätzlich zu den oben angegebenen Säuren, monoolefinisch ungesättigte, basische N-Atome aufweisende Monomere einpolymerisiert, besonders tertiäre Aminoverbindungen, wie N,N-Dimethyl- und N,N-Diethyl-aminoethyl-(meth)acrylamid und -(meth)acrylat, Dimethyl- und Diethylaminoethylvinylether, N-Vinylimidazol, N-Vinylimidazolin, Vinylpyridin, sowie N-substituierte amide, wie Mono- und Dialkyl(meth)acrylamid, N-Vinylformamid, N-Vinylpyrrolidon und N-Vinylcaprolactam.

Weiter sind solche Überzugs-, Imprägnier- und Klebemittel bevorzugt, die einen Zusatz nicht einpolymerisierter Mono- und/oder Polycarbonsäuren, wie Mono- und/oder Polycarbonsäuren, wie Ameisensäure, Essigsäure, Propionsäure, Cyclohexancarbonsäure, 2-Ethylehexansäure, Isodecansäure, Stearinsäure, Oxalsäure, Malonsäure, Bernsteinsäure, Benzoesäure, Phthalsäure oder deren Monoalkylester, Citronensäure, Polysäuren, wie sie durch Homo- oder Copolymerisation der oben genannten, olefinisch ungesättigten Carbon-, Phosphon- und Sulfonsäuren mit copolymerisierbaren Vinylmonomeren erhalten werden, deren Ammonium- oder Alkalisalze oder Trialkylamine mit 3 bis 30 C-Atomen und/oder (Dialkyl)carbonsäureamide mit 1 bis 30 C-Atomen, und/oder (Dialkyl)carbonsäureamide mit 3 bis 30 C-Atomen, wie Triethylamin, Tributylamin, Isopropyldiethylamin, Diethylpropionamid, Stearinsäureamid, oder auch Polymere, die durch Homo- oder Copolymerisation oder oben genannten, monoolefinisch ungesättigten, basische N-Atome aufweisenden Monomeren mit copolymerisierbaren Vinylmonomeren erhalten werden können, enthalten. Die Mengen der einpolymerisierten und/oder nicht einpolymerisierten Säuren bzw. Basen liegen vorzugsweise zwischen 0,1 und 20, insbesondere zwischen 1 und 10 Gew.%, bezogen auf die Copolymerisate (A). Die Säuren bzw. Basen der genanten Art beschleunigen die Vernetzungsreaktion katalytisch ; weniger als 0,1 Gew.% haben meist nur geringe Wirkung und mehr als 20 Gew.% werden in der Regel nicht benötigt.

Zur Herstellung der Copolymerisate (A) können auch funktionelle Gruppen enthaltende Monomere mitverwendet werden, z. B. Hydroxyalkyl(methy)acrylate, wie 2-Hydroxypropyl-acrylat und -methacrylat, 2-Hydroxyethyl-(meth)-acrylat, 4-Hydroxybutyl-(meth)acrylat sowie Glycidylacrylat und -methacrylat.

Die Copolymerisate (A) weisen meist K-Werte nach DIN 53726 (1 %ig in THF) von 10 bis 100 auf.

Die Copolymerisate (A) enthalten als Hauptmonomere meist überwiegende Anteile, z. B. 50 bis 99 % ihres Gewichts, insbesondere 80 bis 95 % (Meth)acrylsäureester von Alkanolen mit 1 bis 20 C-Atomen, wie Methyl-, Ethyl-, Propyl-, n-, i- und t-Butyl-, Cyclohexyl-, 2-Ethylhexyl-, Decyl-, Lauryl- und Stearylacrylat und/oder -methacrylat, Vinylester 1 bis 20 C-Atome enthaltender gesättigter Carbonsäuren, wie Vinylformiat, -acetat, -propionat, -butyrat, -laurat und -stearat, Vinylether mit 3 bis 22 C-Atomen, wie Methyl-, Ethyl-, Butyl-, Hexyl, Octadecylvinylether, Vinylaromaten mit 8 bis 12 C-Atomen, wie besonders Styrol, oder ferner Methylstyrol, Vinyltoluole, t-Butylstyrol und Halogenstyrole, Olefine mit 2 bis 20 C-Atomen, wie Ethylen, Propylen, n- und i-Butylen, Diisobuten, Triisobuten und Oligopropylene, und/oder Vinylhalogenide wie Vinylchlorid, und Vinylidenchlorid, sowie ferner Allylether oder Allylester. Bevorzugt werden (Meth)acrylester 1 bis 8 C-Atome Enthaltender Alkanole, Vinylacetat, Vinylpropionat und/oder Styrol verwendet.

Zur Herstellung von Polyacrylathaftkleberlösungen verwendet man bevorzugt solche Monomere, deren Copolymerisate Glastemperaturen unter 0 °C aufweisen, aus (Meth)acrylsäurealkylestern 1 bis 20 C-Atome enthaltender Alkanole, besonders bevorzugt solche, deren Homopolymerisate Glastemperaturen unter — 10 °C haben, speziell Copolymerisate des n- und i-Butyl- sowie des 2-Ethylhexyl-, Decyl- une Lauryl(meth)acrylats, und/oder Vinylester, wie Vinylacetat und -propionat. Für Haftkleber-Copolymerisate werden die übrigen, oben genannten Monomeren im allgemeinen zu nicht mehr als 40 Gew.%, bezogen auf (A), mitverwendet, davon sind (Meth)acrylsäureester von 1 bis 4 C-Atome enthaltenden Alkanolen, wie Methyl-, Ethyl- und Butyl(meth)acrylat bevorzugt.

Die Herstellung der Copolymerisate (A) kann z. B. gemäß GB-PS 1 546 144, EP-PS 39 797, GB-PS 1 448 937 oder EP 35 16 erfolgen.

Die erfindungsgemäßen Mittel enthalten als Komponente (B) Umsetzungsprodukte von 0,001 bis 2 Äquivalenten, bezogen auf (a), Polyhydrazin-Verbindungen (b) mit Monoaldehyden und/oder Monoketonen (c) eines Siedepunkts von 30 bis 200 °C. Vorzugsweise leitet sich die Komponente (B) von 0,01 bis 1,5, insbesondere von 0,1 bis 1,0 Äquivalenten, bezogen auf 1 Mol (a), Polyhydrazin-Verbindung (b) ab, und wird im allgemeinen durch Vermischen mit einem Überschuß von mindestens 5 Mol (c), insbesondere mindestens 10 Mol (c) je Äquivalent (b) erhalten.

Die Aldehyde und insbesondere die Ketone (c) können auch als Lösemittel ohne Zusatz weiterer Lösemittel (C) eingesetzt werden. Werden weniger als 1 Mol (c) je Äquivalent (b) eingesetzt, so tritt häufig eine starke Viskositätserhöhung der Mittel auf.

Als Polyhydrazin-Verbindungen (b) eignen sich z. B. Dihydrazide organischer Di- oder Oligocarbonsäuren, sowie Polyhydrazide, die sich von (Meth)acrylesterpolymerisaten ableiten. Als Beispiele seien genannt Malonsäure-, Bernsteinsäure-, Glutarsäure-, Adipinsäure-, Pimelinsäure-, Korksäure-, Azelainsä-

3

ure-, Sebacinsäure-, Undecandisäure-, Dodecandisäure-, Tridecandisäure-, Tetradecandisäure-, Pentadecandisäure-, Hexadecandisäure-, Docosandisäure, 2-Methyl-tetradecandisäure-dihydrazid, ferner Methyl-, Ethyl-, Propyl-, Butyl-, Hexyl-, Heptyl-, Octyl-, 2-Ethylhexyl, Nonyl-, Decyl-, Undecyl- und Dodecylmalonsäuredihydrazid, Methyl-, Ethyl-, Propyl-, Butyl-, Hexyl-, Heptyl-, Octyl-bernsteinsäuredihydrazid, 2-Ethyl-3-propyl-bernstein- und -glutarsäuredihydrazid, Cyclohexandicarbonsäure- und Cyclohexylmethylmalonsäure-dihydrazid, Terephthalsäure-, Phenylbernsteinsäure-, Cinnamylmalonsäure- und Benzylmalonsäuredihydrazid, Pentan-1.3.5-tricarbonsäuretrihydrazid, Hex-4-en-1.2.6-tricarbonsäuretrihydrazid, 3-Cyan-pentan-1.3.5-tricarbonsäuretrihydrazid, Dicyanfumarsäuredihydrazid, ferner die Di- bzw. Oligohydrazide von dimerisierten bzw. oligomerisierten ungesättigten Fettsäuren. Durch selektive Hydrierung sind aus den Acylhydraziden Alkylhydrazine zugänglich, die ebenfalls verwendet werden können.

Bevorzugt werden Dihydrazide und Umsetzungsprodukte von Dihydraziden mit Verbindungen der Gruppe (c) eingesetzt, die in organischen Lösemitteln, besonders bevorzugt in Toluol und Toluol enthaltenden Gemischen, speziell mit Verbindungen der Gruppe (c), löslich sind. Eine weitere Gruppe bevorzugter Polyhydrazin-Verbindungen sind Umsetzungsprodukte von Acrylestermischpolymerisaten, speziell solche, die 1 bis 20 Gew.% an Acylhydrazid-Gruppen aufweisen.

Als Komponente (c) werden vorzugsweise ein oder mehrere Ketone und/oder ferner Aldehyde mit jeweils Siedepunkten von 30 °C bis 200 °C, z. B. aliphatische, cycloaliphatische, aromatische und/oder araliphatische Ketone und Aldehyde, wie Acetaldehyd, Propionaldehyd und Butyraldehyd sowie ferner Benzaldehyd, Phenylacetaldehyd sowie Terpenaldehyde eingesetzt. Geeignete ketone sind z. B. Dialkylketone, wie Aceton, Methylethylketon, Diethylketon, i-Propylmethylketon, n-Propylmethylketon, Di-i- und Din-propylketon, t-Butylmethylketon, i-Butylmethylketon, sec.-Butylmethylketon, Di-isobutylketon, cycloaliphatische Ketone, wie Cyclohexanon und aromatisch-aliphatische Ketone wie Acetophenon. Bevorzugt werden Dialkylketone mit Siedepunkten von 50 bis 150 °C verwendet.

Die Umsetzungsprodukte (B) können nach allgemein bekannten Methoden aus den komponenten (b) und (c) erhalten werden. Häufig genügt es, die Komponenten, gegebenenfalls in Gegenwart von Lösemitteln, zusammenzugeben, bei Raumtemperatur oder auch bei erhöhter Temperatur, etwa 50 bis 100 °C. Die Reihenfolge der Zugabe ist dabei nicht entscheidend. Es ist auch möglich, Verbindungen zuzusetzen, die die Umsetzung katalytisch beschleunigen, z. B. Säuren oder Basen wie Sulfonsäuren und Carbonsäuren, deren Alkalisalze, Trialkylamine, Alkylarylamine und deren Ammoniumsalze. Das Verfahren zur Herstellung der Umsetzungsprodukte aus (b) und (c) ist nicht erfindungswesentlich, es können auch andere als das oben beschriebene Verfahren angewendet werden.

Die erhaltenen Umsetzungsprodukte können dann zur Herstellung der neuen Mittel mit den Copolymerisaten (A), die in Lösung oder Dispersion vorliegen können, vermischt werden. Man kann aber auch die Polyhydrazin-Verbindungen (B) in gelöster oder dispergierter Form Lösungen oder Dispersionen der Copolymerisate (A), die mit Aldehyden und/oder Ketonen (c) sowie gegebenenfalls Lösungsmittel (C) versmicht sind, zusetzen.

Wenngleich die erfindungsgemäßen Mittel ohne Mitverwendung zusätzlicher Lösemittel hergestellt werden können, besonders wenn die Copolymerisate (A) als wäßrige Dispersionen eingesetzt werden, so werden doch meist zusätzliche Lösemittel eines Siedebereichs von 30 bis 250 °C, wie Wasser, Alkohole, wie Methanol, Ethanol, n- und i-Propanol, n-, i- und t-Butanol, Amylalkohole, Cyclohexanol, Ester, wie Methyl-, Ethyl-, Propyl-, Butyl- formiat und -acetat, Ether, wie Diethyl-, Dibutyl-, Dipropylether, Tetrahydrofuran, Dioxan, Glycole, wie Ethylenglycol, Propylenglycol, Butandiole, Glycolether wie Methyl-, Ethyl-, Butyl-, Dimethyl-, Diethyl-, Dibutylglycol, Diglycoldiethylether, Diglycoldimethylether, Diglycolmonoethylether, Diglycolmonomethylether, Glycolester wie Glycol(di)acetat, Etherester wie Methyl- und Ethylglycolacetat, aromatische Kohlenwasserstoffe wie Benzol, Toluol, Xylole, Ethylbenzol, Butylbenzole und Halogenbenzole, daneben Benzine des genannten Siedebereichs sowie Alkane, z. B. Pentan, Hexan, Heptan, Octan oder auch Dimethylformamid mitverwendet.

Für Haftkleber werden bevorzugt Lösemittel eines Siedebereichs von 50 bis 150 °C verwendet, die daneben noch kleine Anteile höher- und/oder niedrigersiedender Komponenten enthalten können. Besonders bevorzugt setzt man Kohlenwasserstoffe, wie Toluol und/oder Benzine eines Siedebereichs von 60 bis 120 °C ein.

Die Menge an Lösemitteln (C) richtet sich danach, wieviel notwendig ist, um eine für das jeweilige Auftragsverfahren geeignete Lösungsviskosität einzustellen. In der Regel verwendet man 10 bis 900 Gew.%, bezogen auf die Copolymerisate (A), bevorzugt 20 bis 200, insbesondere 25 bis 150 Gew.%.

Die erfindungsgemäßen Mittel können in üblicher Weise modifiziert und/oder konfektioniert werden, wobei z. B. übliche klebrigmachende Harze, wie Kohlenwasserstoffharze, gegebenenfalls modifizierte Kolophoniumharze, Terpenphenolharze, Ketonharze, Aldehydharze, Kumaron-Inden-Harze, Weichmacher auf Basis von Mono-, Di- oder Polyesterverbindungen, polychlorierten Kohlenwasserstoffen oder Paraffinölen, Farbstoffe, Pigmente, Stabilisatoren, wie Tertiärbutylhydrochinon oder andere Stoffe mit klebenden Eigenschaften, z. B. Natur- oder Synthesekautschuk, Polyvinylether, Polybutadienöle oder andere Haftklebebindemittel zugegeben werden können.

Die neuen Mittel eignen sich als Lösungen zur Herstellung von Überzügen, Beschichtungen und Imprägnierungen, insbesondere zur Herstellung von Haftklebern, -folien und -etiketten sowie Prägezangenfolien. Dabei können die Mittel, z. B. die Copolymerisat-Lösungen in an sich üblicher Weise durch Streichen, Spritzen, Walzen, Rakeln oder Gießen auf die üblichen flächigen Substrate aufgebracht werden, beispielsweise auf Papier, Pappe, Zellstoff, Holz, Metalle oder Folien, z. B. auf gegebenenfalls weichgemachtem PVC, Polyethylen, Polypropylen, Polyamid oder Polyethylenglykolterephthalat oder Aluminium. Von den frisch hergestellten Überzügen, Imprägnierungen oder Beschichtungen können die Lösungsmittel leicht, gegebenenfalls bei Raumtemperatur oder wenig erhöhten Temperaturen, im allgemeinen bei Temperaturen von 20 bis 150 °C, vorzugsweise von 50 bis 80 °C abgedampft werden, wobei man gut klebende Überzüge erhält, die eine hohe Kohäsion und eine gute Schälfestigkeit bei vorzüglicher Alterungsbeständigkeit aufweisen. Das Trocknen der Überzüge, Beschichtungen oder Imprägnierungen kann in an sich üblicher Weise unter Verwendung z. B. von Heizstrahlern oder Warmluftumwälzvorrichtungen erfolgen. In manchen Fällen ist es dabei zur Beschleunigung des vollständigen Abdampfens der Lösungsmittel vorteilhaft, auf Temperaturen von 70 °C und darüber, z. B. auf 120 °C zu erwärmen, da Restgehalte an Lösungsmitteln die Kohäsion der Klebefilme vermindern können.

Die Klebeeigenschaften von flächigen Substraten, die eine Haftklebebeschichtung aufweisen, kann durch Messen der Scherfestigkeit als Maß für die Kohäsion und der Schälfestigkeit als zusammenfassendes Maß für Kohäsion und Oberflächenklebrigkeit erfaßt werden. Für die Prüfung werden Folien aus Polyethylenglykolterephthalat mit erfindungsgemäßen Mitteln (z. B. Lösungen) derart beschichtet, daß sich eine Trockenschichtdicke von 25 μm ergibt. Die Lösungsmittel werden 1 Minute bei 70 °C und 1 bar abgedampft. Die getrockneten, beschichteten Folien werden in 2 cm breite Streifen geschnitten und diese Streifen auf eine verchromte Messingplatte aufgebracht. Die Platte wird dann mit den Streifen 24 Stunden bei 23 °C und 65 % relativer Luftfeuchtigkeit gelagert.

Zur Messung der Schälfestigkeit werden die Prüfstreifen parallel zur Klebeschicht mit einer Geschwindigkeit von 300 mm/min rückwärts abgezogen. Die hierfür erforderliche Kraft wird gemessen.

Bei der Messung der Scherfestigkeit wird eine verklebte Fläche von 20 × 45 mm zurechtgeschnitten, die Platte senkrecht eingespannt und der überhängende Teil des Klebestreifens mit einem Gewicht von 1 kg belastet. Es wird die Zeit bestimmt, bis sich die Verklebung löst. Die Messung wird bei 23 °C durchgeführt. Alle Messungen werden 3-fach gemacht.

Die in den folgenden Beispielen angegebenen Teile und Prozente beziehen sich auf das Gewicht. Die Bestimmung der K-Werte erfolgte nach DIN 53 726 in 1%iger Lösung in Tetrahydrofuran. Die Messung der Viskositäten erfolgte in einem Epprecht-Rheometer mit dem Meßbecher C bei 20 °C.

Copolymerisat A1 (nichtwäßrige Dispersion)

220 Teile n-Butylacrylat, 30 Teile Vinylacetat, 4 Teile Styrol, 19 Teile Methacrylsäure und 3 Teile Methylvinylketon ($\hat{=}$ 0,015 Mol je 100 g (A1)) werden unter Zusatz von 0,1 Teilen Azoisobutyronitril bei 82 °C in 644 Teilen Hexan/Ethylacetat (1:0,6) polymerisiert. Man erhält eine Dispersion eines Copolymerisats A1, dessen K-Wert 73 beträgt.

Copolymerisat A2 (nichtwäßrige Lösung)

112 Teile 2-Ethylhexylacrylat, 14 Teile Vinylpropionat, 6 Teile Maleinsäuremonobutylester, 5 Teile Acrylsäure und 1,4 Teile Acetonylacrylat ($\hat{=}$ 0,008 Mol je 100 g (A)) werden unter Zusatz von 0,01 Teilen Azoisobutyronitril bei 85-90 °C in 169 Teilen Benzin 65/95 polymerisiert. Man erhält eine Lösung eines Copolymerisats A2 vom K-Wert 68.

Copolymerisat A3 (nichtwäßrige Lösung)

149 Teile i-Decylacrylat, 28 Teile Methylacrylat, 7 Teile Maleinsäuremonomethylester, 3 Teile Methacrylsäure und 4 Teile $\alpha$-Ethylacrolein ($\hat{=}$ 0,02 Mol je 100 g (A)) werden unter Zusatz von 2 Teilen t-Butylperoctoat bei schwachem Rückfluß polymerisiert. Als Lösemittel werden 103 Teile Toluol/Benzin 65/95 (1:3) verwendet. Das erhaltene Copolymerisat A3 hat den K-Wert 63.

Vernetzerlösung V 1

76 Teile (2-Ethylhexyl)-malonsäurediethylester wurden mit 30 Teilen Hydrazinhydrat in 274 Teilen Ethanol 6 Stunden am Rückfluß gekocht. Anschließend wurde das Lösemittel abdestilliert, der Rückstand aus Ethylacetat zweimal umkristallisiert und die Kristalle wurden getrocknet (Fp. 128-131 °C). 24 Teile des so erhaltenen Dihydrazids wurden mit 58 Teilen Aceton, 4 Teilen Natriumacetat und 100 Teilen Ethanol 4 Stunden am Rückfluß gekocht. Anschließend wurden die Lösemittel abgezogen, der Rückstand wurde mit 13,5 Teilen Wasser verrührt und das Gemisch über ein Filter abgesaugt. Der Rückstand wurde an der Luft getrocknet, Fp. 128-131 °C. 35 Teile des so erhaltenen (2-Ethylhexyl)-malonsäuredi(isopropyliden)-hydrazids wurden in 60 Teilen Toluol und 5 Teilen Ethanol gelöst.

Vernetzerlösung V 2

Analog dem für die Vernetzerlösung V 1 beschriebenen Verfahren wurde 2-Butylmalonsäuredi(4-methylpent-2-yliden)hydrazid hergestellt. 35 Teile dieses Bishydrazons wurden in 60 Teilen Toluol und 5 Teilen Xylol gelöst.

Vernetzerlösung V 3

16 Teile Dimerleinölfettsäure wurden mit 0,04 Teilen p-Toluolsulfonsäure und 2 Teilen Methanol auf 150 °C erwärmt. Weitere 6 Teile Methanol wurden während 4 Stunden zugegeben, in dieser Zeit wurde ständig ein Wasser-Methanol-Gemisch abdestilliert. Man läßt reagieren, bis die Säurezahl 5 erreicht wird, gibt anschließend weitere 15 Teile Methanol zu, erhitzt zum Rückfluß, gibt 3 Teile Hydrazinhydrat in 2 Stunden zu und rührt 12 Stunden nach. Anschließend läßt man abkühlen, fügt 4 Teile Wasser und anschließend 5 Teile Toluol hinzu, trennt die organische Phase ab und engt bis zur Trockne ein. Anschließend löst man 5 Teile des Rückstands in 5 Teilen Toluol.

Vernetzerlösung V 4

8 Teile einer Polyethylenglycol-$\alpha,\omega$-dicarbonsäure mit einem Zahlenmittelmolekulargewicht von 600 (dampfdruckosmometrisch) werden analog den für Vernetzerlösung V 3 beschriebenen Verfahren behandelt. 5 Teile des so erhaltenen Rückstands werden in 65 Teilen Toluol and 30 Teilen Diethylketon gelöst.

Vernetzerlösung V 5

Entsprechend dem für Vernetzerlösung V 1 beschriebenen Verfahren wird 2-Stearylmalonsäuredi(4-methyl-pent-2-yliden)-hydrazid hergestellt und 40%ig in Toluol/Xylol 5 : 1 gelöst.

Beispiel 1

75 Teile der Copolymerisat A 1 Dispersion werden zuerst mit 2 Teilen Methylethylketon, anschließend mit 0,4 Teilen der Vernetzerlösung V 3 versetzt (Mol Keton : Äquivalent Hydrazid = 50 : 1).

Beispiel 2

Man gibt zu 48 Teilen der Copolymerisat A 2 Lösung zunächst 1,1 Teile Aceton, danach 1 Teil der Vernetzerlösung V 1 (Mol Keton : Äquivalent Hydrazid = 9.8 : 1).

Beispiel 3

57 Teile der Copolymerisat A 3 Lösung werden mit 8 Teilen der Vernetzerlösung V 4 versetzt (Mol Aldehyd : Äquivalent Hydrazid = 23 : 1).

Vergleichsbeispiel 1

Man verfährt, wie im Beispiel 2 angegeben, gibt jedoch kein Aceton zu. Der Ansatz geliert innerhalb 1 Stunde und kann nicht aufgetragen werden.

Beispiel 4

Man stellt eine Polymerlösung analog der Copolymerisat A 2-Lösung her, verwendet jedoch anstatt des Maleinsäuremonobutylesters und der Acrylsäure 10 Teile Styrol. Zu 57 Teilen dieser Lösung werden 4,5 Teile 4-Methyl-2-pentanon und 0,9 Teile der Vernetzerlösung V 2 gegeben. Man trocknet den nach dem Auftragen erhaltenen Film während 24 Stunden durch Ablüften bei Raumtemperatur (Mol Keton : Äquivalent Hydrazid = 26 : 1).

Beispiel 5

Man gibt zu 127 Teilen der Lösung aus Beispiel 4 5 Teile Ameisensäure und trocknet, wie im Beispiel 4 beschrieben.

Beispiel 6

Man gibt zu 67 Teilen der im Beispiel 4 beschriebenen Lösung 11 Teile einer Polymerlösung, die durch Polymerisation von 107 Teilen t-Butyl-acrylat und 41 Teilen N,N-Dimethylaminoethylacrylat in 100 Teilen Toluol unter Verwendung von 1,2 Teilen Benzoylperoxid bei 87 °C erhalten worden ist.

## Beispiel 7

58 Teile der Copolymerisat A 2-Lösung werden mit 2 Teilen Benzaldehyd und 0,6 Teilen der Vernetzerlösung V 2 versetzt. Die Trocknung erfolgte hier durch Ablüften unter Normaldruck 12 Stunden bei Raumtemperatur und 5 Minuten bei 120 °C (Mol Aldehyd/Keton : Äquivalent Hydrazid 17 : 1).

## Beispiel 8

87 Teile der Copolymerisat A 2-Lösung werden mit 2,5 Teilen Isobutyraldehyd und 1 Teil der Vernetzerlösung V 1 versetzt. Die Trocknung erfolgte durch 12-stündiges Ablüften bei Raumtemperatur (Mol Keton/Aldehyd : Äquivalent Hydrazid = 16 : 1).

## Beispiel 9

115 Teile der Copolymerisat A 2 Lösung, 5 Teile Acetophenon und 1,8 Teile der Vernetzerlösung V 5 werden zusammengegeben. Man läßt 1 Stunde bei ca. 40 °C unter Benutzung eines Warmluftgebläses trocknen (Mol Keton : Äquivalent Hydrazid = 15 : 1).

Die beschriebenen Zubereitungen werden wie oben beschrieben geprüft ; die Scherfestigkeit wird zusätzlich nach 3-tägiger Lagerung der Proben bei 50 °C erneut geprüft, um eine Aussage über die Lagerstabilität zu erhalten. Die Werte sind in der folgenden Tabelle 1 aufgeführt.

Tabelle 1

| Beispiel | Kohäsion ohne Lagerung [h] | Kohäsion nach Lagerung [h] | Schäl- festigkeit [N/2 cm] | Viskosität vor nach Lagerung [Pas] | |
|---|---|---|---|---|---|
| 1 | >120 | >120 | 10,3 | 5,1 | 6,5 |
| 2 | >120 | >120 | 7,2 | 3,8 | 4,5 |
| 3 | >120 | >120 | 9,4 | 4,8 | 5,8 |
| 4 | 27 | 33 | 9,7 | 3,6 | 4,4 |
| 5 | >120 | >120 | 8,9 | 3,9 | 4,9 |
| 6 | 105 | >120 | 10,2 | 3,7 | 4,6 |
| 7 | >120 | >120 | 7,4 | 4,3 | 5,5 |
| 8 | >120 | >120 | 6,9 | 6,4 | 7,9 |
| 9 | 75 | 95 | 8,1 | 5,2 | 6,8 |

Eine Kohäsion von > 24 h wird als gut, über 120 h als sehr gut bewertet. Nimmt die Viskosität bei der Lagerung nicht mehr als um etwa den Faktor 1,3, zu, so ist die Lagerstabilität sehr gut.

**Patentansprüche**

1. Selbstvernetzende Überzugs-, Imprägnier- und Klebemittel, die im wesentlichen aus

(A) Copolymerisaten olefinisch ungesättigter Monomerer, die auf 100 g des Copolymerisats 0,0001 bis 0,5 Mol α,β-monoolefinisch ungesättigte Aldehyde und/oder Ketone (a) einpolymerisiert enthalten,

(B) Reaktionsgemische von 0,001 bis 2 Äquivalenten, bezogen auf (a), Polyhydrazin-Verbindungen (b) mit mindestens 5 Mol je Äquivalent (b) Monoaldehyden und/oder Monoketonen (c) eines Siedepunktes von 30 bis 200 °C und

(C) 0 bis 900 Gew.%, bezogen auf Copolymerisat (A), Lösungsmitteln, die gegen (b) indifferent sind und einen Siedepunkt zwischen 30 und 250 °C haben,
bestehen.

2. Mittel gemäß Anspruch (1), dadurch gekennzeichnet, daß die Copolymerisate (A) 0,1 bis 20 Prozent ihres Gewichts α,β-olefinisch ungesättigte 3 bis 6 C-Atome enthaltende Mono- und/oder Dicarbonsäuren und/oder Monoalkylester 4 bis 6 C-Atome enthaltender α,β-monoolefinisch ungesättigter Dicarbonsäuren mit 1 bis 20 C-Atomen in den Alkylgruppen und/oder monolefinisch ungesättigte Sulfonsäuren und/oder Phosphonsäure und/oder monoolefinisch ungesättigte, basische N-Atome aufweisende Monomere einpolymerisiert enthalten.

3. Mittel gemäß Anspruch 1, gekennzeichnet durch einen Gehalt zwischen 0,1 und 20 Gewichtsprozent, bezogen auf das Copolymerisat (A), an einer Carbonsäure und/oder deren Ammonium- und/oder Alkalisalz und/oder eines 3 bis 30 C-Atome enthaltenden Trialkylamins und/oder eines 3 bis 30 C-Atome enthaltenden N,N-Dialkylcarbonsäureamids.

4. Mittel gemäß Anspruch 1 bis 3, dadurch gekennzeichnet, daß die Copolymerisate (A) 50 bis 99 % ihres Gewichtes an Acryl- und/oder Methacrylsäureestern 1 bis 12 C-Atome enthaltender Alkanole und/oder an Vinylestern 2 bis 10 C-Atome enthaltender gesättigter aliphatische Carbonsäuren einpolymerisiert enthalten.

5. Mittel gemäß Anspruch 1 bis 3, dadurch gekennzeichnet, daß die Copolymerisate (A) 50 bis 99 % ihres Gewichts eines Gemisches aus 40 bis 60 Gewichtsteilen Butadien und 60 bis 40 Gewichtsteilen Styrol und/oder Acrylnitril einpolymerisiert enthalten.

6. Mittel gemäß Anspruch 4, dadurch gekennzeichnet, daß die Copolymerisate (A) Glastemperaturen unter 0 °C haben.

7. Mittel gemäß den Ansprüchen 1 bis 6, dadurch gekennzeichnet, daß die Polyhydrazinverbindungen (b) 2 bis 5 Hydrazin- und/oder Hydrazidgruppen aufweisen.

## Claims

1. A self-crosslinking coating or impregnating agent or adhesive which essentially consists of

(A) copolymers of olefinically unsaturated monomers, which contain, as copolymerized units, from 0.0001 to 0.5 mole of $\alpha,\beta$-monolefinically unsaturated aldehydes and/or ketones (a) per 100 g of copolymer,

(B) reaction mixtures of from 0.001 to 2 equivalents, based on (a), of polyhydrazine compounds (b) with not less than 5 moles, per equivalent of (b), of monoaldehydes and/or monoketones (c) having boiling points of from 30 to 200 °C, and

(C) from 0 to 900 % by weight, based on the copolymer (A), of solvents which are inert to (b) and have boiling points of from 30 to 250 °C.

2. An agent as claimed in claim 1, wherein the copolymers (A) contain, as copolymerized units, from 0.1 to 20 % by weight of $\alpha,\beta$-olefinically unsaturated mono- and/or dicarboxylic acids of 3 to 6 carbon atoms and/or $C_1$-$C_{20}$-monoalkyl esters of $\alpha,\beta$-monoolefinically unsaturated dicarboxylic acids of 4 to 6 carbon atoms and/or monoolefinically unsaturated sulfonic acids and/or phosphonic acids and/or monoolefinically unsaturated monomers possessing basic N atoms.

3. An agent as claimed in claim 1, which contains from 0.1 to 20 % by weight, based on the copolymer (A), of a carboxylic acid and/or its ammonium and/or alkali metal salt and/or a trialkylamine of 3 to 30 carbon atoms and/or an N,N-dialkylcarboxamide of 3 to 30 carbon atoms.

4. An agent as claimed in claim 1 or 2 or 3, wherein the copolymers (A) contain, as copolymerized units, from 50 to 99 % by weight of acrylates and/or methacrylates of alkanols of 1 to 12 carbon atoms and/or vinyl esters of saturated aliphatic carboxylic acids of 2 to 10 carbon atoms.

5. An agent as claimed in claim 1 or 2 or 3, wherein the copolymers (A) contain, as copolymerized units, from 50 to 99 % by weight of a mixture of 40-60 parts by weight of butadiene and 60-40 parts by weight of styrene and/or acrylonitrile.

6. An agent as claimed in claim 4, wherein the copolymers (A) have a glass transition temperature of below 0 °C.

7. An agent as claimed in claim 1 or 2 or 3 or 4 or 5 or 6 wherein the polyhydrazine compounds (b) possess from 2 to 5 hydrazine and/or hydrazide groups.

## Revendications

1. Compositions adhésives, d'imprégnation et de revêtement autoréticulantes, constituées essentiellement

(A) de copolymères de monomères à insaturation oléfinique, dans lesquels est copolymérisée entre 0,0001 et 0,5 mole d'aldéhydes et(ou) de cétones à insaturation $\alpha,\beta$-mono-oléfinique (a) pour 100 g de copolymère,

(B) de mélanges de la réaction de 0,001 à 2 équivalents par rapport à (a) de dérivés polyhydraziniques (b) et d'au moins 5 moles par équivalent (b) de monoaldéhydes et(ou) de mono-cétones (c) avec un point d'ébullition compris entre 30 et 200 °C et

(C) de 0 à 900 % en poids par rapport au copolymère (A) de solvants avec un point d'ébullition compris entre 30 et 250 °C, inertes vis-à-vis de (b).

2. Composition suivant la revendication 1, caractérisée en ce que dans les copolymères (A) sont copolymérisés entre 0,1 et 20 % de leur poids d'acides mono- et(ou) di-carboxyliques en $C_3$ à $C_6$ à insaturation $\alpha,\beta$-mono-oléfinique et(ou) d'esters mono-alkyliques à radicaux alkyle en $C_1$ à $C_{20}$ d'acides dicarboxyliques en $C_4$ à $C_6$ à insaturation $\alpha,\beta$-mono-oléfinique et(ou) d'acides phosphoniques et(ou) d'acides sulfoniques à insaturation mono-oléfinique et(ou) de monomères à insaturation mono-oléfinique, comprenant des atomes d'azote basiques.

3. Composition suivant la revendication 1, caractérisée en ce qu'elle contient entre 0,1 et 20 % du poids du copolymère (A) d'un acide carboxylique et(ou) d'un sel d'ammonium et(ou) de métal alcalin d'un tel acide et(ou) d'une trialkyl-amine en $C_3$ à $C_{30}$ et(ou) d'un amide d'un acide N,N-dialkyl-carboxylique en $C_3$ à $C_{30}$.

4. Composition suivant les revendications 1 à 3, caractérisée en ce que dans les copolymères (A) sont copolymérisés entre 50 et 99 % de leur poids d'esters acryliques et(ou) méthacryliques d'alcanols en $C_1$ à $C_{12}$ et(ou) d'esters vinyliques d'acides carboxyliques aliphatiques saturés en $C_2$ à $C_{10}$.

5. Composition suivant les revendications 1 à 3, caractérisée en ce que dans les copolymères (A) sont copolymérisés entre 50 et 99 % de leur poids d'un mélange de 40 à 60 parties en poids de butadiène et de 60 à 40 parties en poids de styrène et(ou) d'acrylonitrile.

6. Composition suivant la revendication 4, caractérisée en ce que les copolymères (A) possèdent une température de transition vitreuse inférieure à 0 °C.

7. Composition suivant les revendications 1 à 6, caractérisée en ce que les dérivés polyhydraziniques (b) comprennent deux à cinq groupes hydrazine et(ou) hydrazide.